# EUROPEAN PATENT SPECIFICATION

(11) **EP 2 225 295 B1**
(45) Date of publication and mention of the grant of the patent: **23.10.2013**
(21) Application number: 08859248.0
(22) Date of filing: 01.12.2008
(51) Int. Cl.: C08F 255/04, B29C 47/00, B29C 47/78, C08F 255/00, C08F 255/02

(54) **EXTRUSION PROCESS FOR GRAFTING RUBBERS**
STRANGPRESSVERFAHREN ZUR PFROPFUNG VON KAUTSCHUK
PROCÉDÉ D'EXTRUSION POUR GREFFER DES CAOUTCHOUCS

(30) Priority: 12.12.2007 EP 07024052; 13.12.2007 US 200761013359 P
(43) Date of publication of application: 08.09.2010
(60) Divisional application: 13151204.8
(73) Proprietor: Lanxess Elastomers B.V., 6167 AC Geleen (NL)
(72) Inventor: MEESSEN, Patric, B-B4728 La Calamine (BE); HOUTVAST, Franciscus, Victoire, Paulus, NL-6361 BX Nuth (NL); GEESINK, Johannes, Hendrik, NL-6365 AR Schinnen (NL); QIU, Joe, LA 70808 Baton rouge (US)
(74) Representative: Herbold, Matthias
(86) International application number: PCT/EP2008/066534
(87) International publication number: WO 2009/074477

(56) References cited:
- WO-A-2006/039774
- US-A- 4 612 155
- US-A- 5 551 974
- US-A- 5 969 050

## Description

The invention relates to a process for producing a grafted rubber comprising:
a) providing an ethylene/propylene rubber having a weight average molecular weight (Mw) of at least 80 kg/mol in a continuous extrusion reactor.
b) drying the rubber in the continuous extrusion reactor;
c) providing the dried rubber to a first injection zone of the continuous extrusion reactor,
d) in the first injection zone, providing successively a first amount of maleic anhydride and a first amount of free-radical initiator to the dried rubber;
e) reacting maleic anhydride with the rubber in a first reactor zone of the continuous extrusion reactor to produce a grafted rubber;
f) in a second injection zone, providing successively a second amount of maleic anhydride and a second free-radical initiator
g) applying shear to the grafted rubber in a second reactor zone of the continuous extrusion reactor, the shear sufficient to reduce the weight average molecular weight (Mw) of the grafted rubber by a factor of at least 2.

Document WO 2006/039774 describes a continuous extrusion process for the manufacturing of a maleic grafted ethylene-propylene rubber comprising the above-mentioned steps with the provision that the rubber is dried to a moisture content of less than 0.1 wt% and the dried rubber is provided to the first injection zone at a temperature of less than 160°C

Table 6 of WO 2006/039774 describes that 3.8 (1.5 + 2.3) phr maleic anhydride (MAh) and 0.75 (0.3 + 0.45) phr of a peroxide (PO) as free radical initiator are injected to obtain 2.0 wt% of bound MAh. This is an efficiency of 53%. The efficiency of example 4 is not more than 55%. The grafting reaction is typically carried out at temperatures below 160°C. WO 2006/039774 does not disclose how an efficiency of more than 55% can be obtained.

A disadvantage of the process described in WO 2006/039774 is a relatively low efficiency of the grafting reaction, which causes excessive loss of MAh. Documents US 5969050 and US 5551974 disclose continuous extruder processes for grafting polyolefins.

An object of the invention is to provide a process with a high efficiency for the amount of MAh that is grafted onto the rubber.

This object is obtained according to the invention by a process wherein the rubber is fed to a melt dosing unit and transported to the continuous extrusion reactor by a melt pump, dried to a moisture content of between 0.2 and 0.5 wt% and the dried rubber is provided to a first reaction zone of the continuous reactor at a temperature of between 190 and 250°C and the first and the second free radical initiator is an organic peroxide with a half-life (t_{½}) of more than 1 second if measured in mono-chlorobenzene at 220°C.

In an embodiment of the invention grafting efficiency of more than 70% could be obtained.

Another embodiment of the process of the invention is that the residual, non reacted MAh could be reduced to 0.5 wt%. A lower residual amount of MAh reduces side reactions of the unreacted MAh in the extruder under grafting and shearing conditions. High temperature side products of MAh are known to be a source of haziness and discoloration of the functional rubber, hence the reduction of free maleic anhydride results in color and clarity improvements of the product stream. Lower residual MAh allows an improved purification of the product stream by vacuum stripping in the vacuum zone. The level of sensitizing MAh in the product is in consequence reduced.

In the process of the invention the rubber is ethylene-propylene rubber, which is fed to a melt dosing unit and transported to the continuous extrusion reactor by a melt pump. The melt pump dampens fluctuations in the rubber feed stream caused by introducing rubber slabs to the melt extruder. The melt pump further reduces pulsations and fluctuations of the system, thus allowing control of reactants dosing and in consequence resulting in product consistency.

In a further embodiment of the invention, the rubber is dried to an amount of between 0.2 and 0.3 wt%.

In a still further embodiment of the invention, the dried rubber is provided to the first reaction zone at a temperature of between 195 and 220°C.

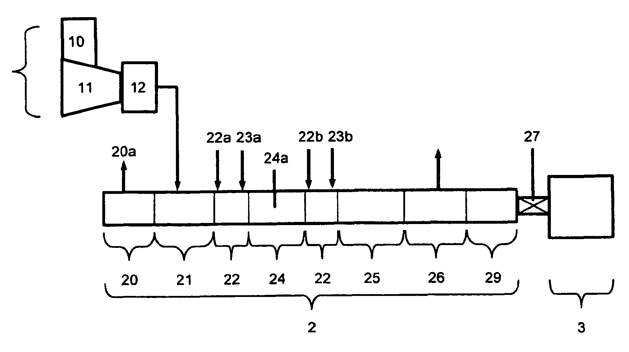

A preferred embodiment of the process of the invention is carried out in a continuous extrusion reactor 2 shown in Fig. 1. The continuous extrusion reactor used in the process of the invention preferably has an UD of less than 56:1. An ethylene-propylene rubber (EPM) is preferably fed via hopper 10 to a melt extruder 11 and transported to the continuous extrusion reactor by a melt pump 12. The EPM melt enters the continuous extrusion reactor at feed zone 21. In the initial heating zone, energy is applied to the rubber to reduce its apparent viscosity. The energy is preferably provided as externally supplied heat delivered through resistance heating elements on the exterior of the continuous extrusion reactor around the initial heating zone and in the form of mechanical work supplied by the rotating screw, which has a geometry selected to provide a degree of shear. Excess moisture is allowed to leave the melt to the atmosphere or vacuum via opening 20a. The remaining moisture content is then less than 0.5 wt%, but at least 0.2 wt%. Drying the EPM to an amount of less than 0.2 wt% has the disadvantage that the screw length and/or the melt temperature have to be increased to remove the remaining moisture. The rubber entering the injection zone 22 preferably has a moisture content of less than 0.3%. Temperature and moisture of the rubber are measured by permitting part of the rubber to exit the extruder at the first maleic anhydride injection point 22a, determining the beginning of the injection zone. The temperature measured at that point is more than 175°C and the amount of moisture, measured by determining the weight loss of a sample after 16 hour in a vacuum oven at 110°C, is preferably between 0.2 and 0.3 wt%. The rubber temperature further increases to a temperature of between 190 and 250°C, preferably of between 195 and 220°C while being conveyed through the first reaction zone 24. This temperature is provided by a melt thermocouple 24a. Molten maleic anhydride (80°C) is fed at the dosing points (22a, 22b). A preferably 30% solution of peroxide in mineral oil can be fed at the dosing points (23a, 23b). Grafting takes place in the reaction zones (24 and 25) at a temperature of between 190 and 250°C. Degassing of the grafted and sheared rubber can be done in a degassing zone of the continuous extrusion reactor e.g. via the vent zone (26) to a vacuum. Final compression of the melt in the extruder head (29) causes a final melt temperature measured at (27) of between 290 and 300°C. The rubber melt exiting the extruder may subsequently be fed to an under water pelletizer system (3) including a pelletizing head with a star knife assembly and water recirculation system with heat exchanger.

### Example 1

An ethylene-propylene rubber (EPM) is preferably fed via hopper 10 to a melt extruder 11 and transported to the continuous extrusion reactor by a melt pump 12

Bales of rubber (Keltan 3200A, a product of DSM Elastomers, 49 wt% ethylene and 51 wt% of propylene with a weight average molecular weight of 180 kg/mol), were stripped of film wrap and fed via hopper 10 to a melt dosing extruder 11 and transported to an extruder arrangement by a melt pump 12 at a feed rate of 50 kg/h. According to the setup, excess moisture was allowed to leave the melt to the atmosphere via opening 20a. Measurement of the rubber melt that was collected from the open injection port 22a resulted in a melt temperature of 176°C and a moisture content of 0.22 wt%. After reinstalling the injection valve, molten maleic anhydride (80°C) was fed at the dosing points (22a, 22b) at a combined feed rate of 2.5% of the rubber throughput. Di-tert-butyl peroxide (Akzo Nobel, Trigonox B) as a 30 wt% solution in mineral oil was fed at the dosing points (23a, 23b) at a combined rate of 0.4% of the rubber throughput. Screw speed was 250 rpm to reach a reaction melt temperature of 201°C measured by the melt thermocouple (24a) in the reaction zone 24. Degassing of unreacted product was done via the vent zone (26) at a vacuum of 200 mbar. Final compression of the melt in the extruder head (29) gave a final melt temperature (27) of 298°C. The rubber melt exiting the extruder was fed to an under water pelletizer system (3) including a pelletizing head with a star knife assembly and water recirculation system with heat exchanger.

The obtained maleic anhydride grafted rubber was a clear light yellow rubber with a melt flow index (MFI) of 4.9 g/10 min (190°C, 2160 g), a gel level of 0.05 wt% and a maleic anhydride functional level measured by IR method of 1.93 wt% (conversion 77%). The residue of free maleic was measured by HPLC to be below 0.1 wt%.

### Example 2

The process was performed under nearly identical conditions as described in example 1 with the major difference being the adjustment of combined feed rate of molten MAh and peroxide to respectively 3.8% and 0.8% of the rubber throughput at the respective dosing points. The reaction melt temperature, measured by the melt thermocouple (24a) was maintained by means of rpm at 202°C. The obtained maleic anhydride grafted rubber was a clear yellow rubber with a melt flow index (MFI) of 4.2 g/10 min (190°C, 2160 g), a gel level of 0.06 wt% and a maleic anhydride functional level measured by IR method of 2.85 wt% (conversion 75%). The residue of free maleic was measured by HPLC to be 0.11 wt%.

### Comparative Experiment A

The process was performed under nearly identical conditions as described in example 1 with the major difference being the adjustment to an increased melt temperature in the maleic anhydride-grafting zone (24) by means of an increased screw severity (e.g. replacement transport with kneading elements) and operating at 350 rpm. Rubber melt collected at the injection port 22a had a temperature of 210°C and a moisture content of 0.2 wt%). Melt temperature, measured by the melt thermocouple (24a) was 254°C. The obtained rubber had a high melt flow index of 8.3 g/10 min (190°C, 2160 g). The level of maleic anhydride by IR was 1.03 wt% (conversion 41%) whereas the free maleic increased to 0.35 wt%.

### Comparative Experiment B

The process was performed under nearly identical conditions as described in example 1 with the major difference being the adjustment to a reduced melt temperature in the maleic anhydride-grafting zone by means of screw speed reduction to 175 rpm. Melt temperature, measured by the melt thermocouple (24a) was 185°C.

The obtained maleic anhydride grafted rubber was a hazy, brownish rubber and the texture of the cold sample indicated presence of gels. This was confirmed by solubility in THF followed by filtration through a 25 micron filter resulting in a gel content of 1.4%. The melt flow index of the sample was not measured. The maleic anhydride functional level by IR method was 1.25 wt% (conversion 50%). The residue of free maleic was measured by HPLC to be 0.23 wt%.

## Claims

1. A process for producing a grafted rubber comprising:
a) providing an ethylene propylene rubber having a weight average molecular weight (Mw) of at least 80 kg/mol in a continuous extrusion reactorby feeding the rubber to a melt dosing unit and transporting the rubber to the continuous extrusion reactor by a melt pump;
b) drying the rubber in the continuous extrusion reactor to a moisture content of between 0.2 and 0.5 wt%, the moisture being measured by determining the weight loss of a sample, collected at a first maleic anhydride injection point after 16 hour in a vacuum oven at 110°C.
c) providing the dried rubber to a first injection zone of the continuous extrusion reactor at a temperature of between 190 and 250°C,
d) in the first injection zone, providing successively a first amount of maleic anhydride and a first free-radical initiator to the dried rubber;
e) reacting maleic anhydride with the rubber in a first reaction zone of the continuous extrusion reactor to produce a grafted rubber;
f) in a second injection zone, providing successively a second amount of maleic anhydride and a second free-radical initiator, the first and the second free radical initiator is an organic peroxide with a half-life (t_{½}) of more than 1 second if measured in mono-chlorobenzene at 220°C.
g) applying shear to the grafted rubber in a second reaction zone of the continuous extrusion reactor, the shear sufficient to reduce the weight average molecular weight (Mw) of the grafted rubber by a factor of at least 2.

2. A process according to claim 1, wherein the rubber is dried to an amount of between 0.2 and 0.3 wt%.

3. A process according to claim 1 or 2, wherein the dried rubber is provided to the first reaction zone at a temperature of between 195 and 220°C

4. A process according to any of the claims 1 - 3, wherein the organic peroxide is chosen from di-t-butyl peroxide, 2,5-dimethyl-2,5-di-(t-butylperoxy) hexane, 2,5-dimethyl-2,5-di-(t-butylperoxy) hexyne-3.

5. A process according to claim 1, wherein between 1.0 and 5.0phr maleic anhydride and between 0.05 and 0.8phr of the organic peroxide is introduced via the injection zones.

6. A process according to claim 1, wherein the total amount of maleic anhydride and peroxide is unevenly split between the first and the second injection zone.

7. A process according to any of the preceding claims, wherein the continuous extrusion reactor has a length to diameter ratio of 56:1 or less.

## Patentansprüche

1. Verfahren zur Herstellung eines gepfropften Kautschuks, bei dem man:
a) einen Ethylen-Propylen-Kautschuk mit einem gewichtsmittleren Molekulargewicht (Mw) von mindestens 80 kg/mol in einem kontinuierlich arbeitenden Extrusionsreaktor bereitstellt, indem man den Kautschuk in eine Schmelzedosierungseinheit einspeist und den Kautschuk mit einer Schmelzepumpe zu dem kontinuierlich arbeitenden Extrusionsreaktor transportiert;
b) den Kautschuk in dem kontinuierlich arbeitenden Extrusionsreaktor auf einen Feuchtigkeitsgehalt zwischen 0,2 und 0,5 Gew.-%, trocknet, wobei die Feuchtigkeit durch Bestimmung des Gewichtsverlusts einer an einem ersten Maleinsäureanhydrid-Einspritzpunkt entnommenen Probe nach 16 Stunden im Vakuumofen bei 110°C gemessen wird;
c) den getrockneten Kautschuk einer ersten Einspritzzone des kontinuierlich arbeitenden Extrusionsreaktors bei einer Temperatur zwischen 190 und 250°C zuführt;
d) in der ersten Einspritzzone dem getrockneten Kautschuk nacheinander eine erste Menge von Maleinsäureanhydrid und einem ersten Radikalinitiator zuführt;
e) in einer ersten Reaktionszone des kontinuierlich arbeitenden Extrusionsreaktors Maleinsäureanhydrid mit dem Kautschuk zu einem gepfropften Kautschuk umsetzt;
f) in einer zweiten Einspritzzone nacheinander eine zweite Menge von Maleinsäureanhydrid und einem zweiten Radika.linitiator zuführt, wobei es sich bei dem ersten und dem zweiten Radikalinitiator um ein organisches Peroxid mit einer Halbwertszeit (t_{1/2}) von mehr als 1 Sekunde bei Messung in Monochlorbenzol bei 220°C handelt;
g) in einer zweiten Reaktionszone des kontinuierlich arbeitenden Extrusionsreaktors auf den gepfropften Kautschuk Scherung ausübt, wobei die Scherung zur Verringerung des gewichtsmittlernen Molekulargewichts (Mw) des gepfropften Kautschuks um einen Faktor von mindestens 2 ausreicht.

2. Verfahren nach Anspruch 1, bei dem man den Kautschuk auf eine Menge zwischen 0,2 und 0,3 Gew.-% trocknet.

3. Verfahren nach Anspruch 1 oder 2, bei dem man den getrockneten Kautschuk der ersten Reaktionszone bei einer Temperatur zwischen 195 und 220°C zuführt.

4. Verfahren nach einem der Ansprüche 1 - 3, bei dem man das organische Peroxid aus Di-t-butylperoxid, 2,5-Dimethyl-2,5-di(t-butylperoxy)hexan und 2,5-Dimethyl-2,5-di(t-butylperoxy)hexin-3 auswählt.

5. Verfahren nach Anspruch 1, bei dem man über die Einspritzzonen zwischen 1,0 und 5,0 phr des Maleinsäureanhydrids und zwischen 0,05 und 0,8 phr des organischen Peroxids einträgt.

6. Verfahren nach Anspruch 1, bei dem man die Gesamtmenge von Maleinsäureanhydrid und Peroxid zwischen der ersten und der zweiten Einspritzzone ungleich aufteilt.

7. Verfahren nach einem der vorhergehenden Ansprüche, bei dem der kontinuierlich arbeitende Extrusionsreaktor ein Länge:Durchmesser-Verhältnis von 56:1 oder weniger aufweist.

## Revendications

1. Procédé de production d'un caoutchouc greffé comprenant les étapes consistant à :
a) fournir un caoutchouc éthylène-propylène possédant une masse moléculaire moyenne en poids (Mw) d'au moins 80 kg/mol dans un réacteur à extrusion continue en chargeant le caoutchouc dans une unité doseuse de masse fondue et en transportant le caoutchouc jusqu'au réacteur à extrusion continue au moyen d'une pompe à masse fondue ;
b) sécher le caoutchouc dans le réacteur à extrusion continue jusqu'à une teneur en humidité comprise entre 0,2 et 0,5 % en poids, l'humidité étant mesurée en déterminant la perte de poids d'un échantillon, recueilli au niveau d'un premier point d'injection d'anhydride maléique après 16 heures dans un four à vide at 110°C ;
c) amener le caoutchouc séché à une première zone d'injection du réacteur à extrusion continue à une température comprise entre 190 et 250°C,
d) dans la première zone d'injection, amener successivement une première quantité d'anhydride maléique et un premier amorceur radicalaire au caoutchouc séché ;
e) faire réagir l'anhydride maléique avec le caoutchouc dans une première zone de réaction du réacteur à extrusion continue pour produire un caoutchouc greffé ;
f) dans une deuxième zone d'injection, amener successivement une deuxième quantité d'anhydride maléique et un deuxième amorceur radicalaire, le premier et le deuxième amorceur radicalaire est un peroxyde organique ayant une demi-vie (t_{1/2}) de plus de 1 seconde si on la mesure dans le monochlorobenzène à 220°C ;
g) appliquer un cisaillement au caoutchouc greffé dans une deuxième zone de réaction du réacteur à extrusion continue, le cisaillement étant suffisant pour réduire d'un facteur au moins égal à 2 la masse moléculaire moyenne en poids (Mw) du caoutchouc greffé.

2. Procédé selon la revendication 1, dans lequel le caoutchouc est séché jusqu'à une quantité comprise entre 0,2 et 0,3 % en poids.

3. Procédé selon la revendication 1 ou 2, dans lequel le caoutchouc séché est amené à la première zone de réaction à une température comprise entre 195 et 220°C.

4. Procédé selon l'une quelconque des revendications 1 - 3, dans lequel le peroxyde organique est choisi parmi le peroxyde de di-t-butyle, le 2,5-diméthyl-2,5-di-(t-butylperoxy)hexane, le 2,5-diméthyl-2,5-di-(t-butylperoxy)hexyne-3.

5. Procédé selon la revendication 1, dans lequel entre 1,0 et 5,0 phr d'anhydride maléique et entre 0,05 et 0,8 phr du peroxyde organique sont introduits via les zones d'injection.

6. Procédé selon la revendication 1, dans lequel la quantité totale d'anhydride maléique et de peroxyde est divisée de façon non uniforme entre la première et la deuxième zone d'injection.

7. Procédé selon l'une quelconque des revendications précédentes, dans lequel le réacteur à extrusion continue possède un rapport longueur/diamètre de 56/1 ou moins.
